# EUROPEAN PATENT SPECIFICATION

(11) **EP 2 271 652 B1**
(45) Date of publication and mention of the grant of the patent: **25.04.2018**
(21) Application number: 09728396.4
(22) Date of filing: 26.03.2009
(51) Int. Cl.: C07F 11/00, C10M 159/18

(54) **PREPARATION OF A MOLYBDENUM AMIDE ADDITIVE COMPOSITION AND LUBRICATING OIL COMPOSITIONS CONTAINING SAME**
ZUBEREITUNG EINER MOLYBDÄNAMIDZUSATZZUSAMMENSETZUNG UND DIESE ENTHALTENDE SCHMIERÖLZUSAMMENSETZUNGEN
PRÉPARATION D'UNE COMPOSITION D'ADDITIF D'AMIDE DE MOLYBDÈNE ET COMPOSITIONS D'HUILES LUBRIFIANTES LA CONTENANT

(30) Priority: 31.03.2008 US 60088
(43) Date of publication of application: 12.01.2011
(73) Proprietor: Chevron Oronite Company LLC, San Ramon, CA 94583 (US)
(72) Inventor: GAURAV, Bhalla, Hercules, CA 94547 (US); RUHE, William, R., Benicia, CA 94510 (US)
(74) Representative: Haseltine Lake LLP
(86) International application number: PCT/US2009/038381
(87) International publication number: WO 2009/123908

(56) References cited:
- US-A- 5 468 891
- US-B1- 6 509 303
- US-B2- 6 914 037
- US-B2- 6 962 896

## Description

### FIELD OF THE INVENTION

This invention relates to new lubricating oil additives and lubricating oil compositions. More specifically, it relates to new lubricating oil compositions containing a friction reducing component comprising the salt of a molybdenum oxide, sulfide, or oxysulfide and an amide.

### BACKGROUND OF THE INVENTION

Molybdenum disulfide has long been known as a desirable additive for use in lubricating oil compositions. Molybdenum disulfide is ordinarily finely ground and then dispersed in the lubricating oil composition to impart friction modifying and antiwear properties. However, one of the major detriments to using finely ground molybdenum disulfide is its lack of solubility.

As an alternative to using finely ground molybdenum disulfide as a friction modifier, a number of other approaches involving various salts of molybdenum compounds have been employed. Molybdenum dithiocarbamates (MoDTC) and molybdenum dithiophosphates (MoDTP) are well known in the art to impart friction modifying properties. Representative compositions of MoDTC are described in Larson et al., U.S. Pat. No. 3,419,589, which teaches molybdenum (VI) dioxide dialkyldithiocarbamates; Farmer et al., U.S. Pat. No. 3,509,051, which teaches sulfurized oxymolybdenum dithiocarbamates; and Sakurai et al., U.S. Pat. No. 4,098,705, which teaches sulfur containing molybdenum dihydrocarbyl dithiocarbamate compositions.
Representative compounds of MoDTP are the compositions described in Rowan et al., U.S. Pat. No. 3,494,866, such as oxymolybdenum diisopropylphosphorodithioate.

Another method of incorporating molybdenum compounds in oil is to prepare a colloidal complex of molybdenum disulfide or oxysulfides dispersed using known dispersants. Known dispersants include basic nitrogen containing compounds including succinimides, carboxylic acid amides, phosphonoamides, thiophosphonoamides, Mannich bases, and hydrocarbonpolyamines.

King et al., U.S. Pat. No. 4,263,152; King et al., U.S. Pat. No. 4,261,843; and King et al., U.S. Pat. No. 4,259,195 teach molybdenum compounds used as anti-oxidant and anti-wear additives comprising an acidic molybdenum compound and a basic nitrogen compound which acts as a dispersant.

DeVries et al., U.S. Pat. No. 4,259,194 discloses a sulfur containing additive comprising the reaction product of ammonium tetrathiomolybdate and a basic nitrogen compound for use as an anti-oxidant, anti-wear agent, and friction modifier.

Nemo, U.S. Pat. No. 4,705,643 teaches the preparation of carboxylic acid amides as detergent additives in lubricating oils.

Udding et al., U.S. Pat. No. 5,468,891 describes antifriction additives for lubricating oils comprising a molybdenum-containing complex prepared by reacting an alkaline earth metal salt of a carboxylic acid, an amine and a source of cationic molybdenum, wherein the ratio of the number of equivalents of acid groups to the number of moles of molybdenum (eq:mol) is in the range from 1:10 to 10:1, and the ratio of the number of equivalents of acid groups to the number of moles of amine (eq:mol) is in the range from 20:1 to 1:10.

Ruhe, Jr. et al., U.S. Pat. No. 6,962,896 describes antioxidant additives for lubricating oils comprising low color molybdenum compounds and polyamide dispersants including molybdenum oxysulfide polyamides.

Gatto et al., U.S. Pat No. 6,174,842 discloses a lubricating oil composition comprising a lubricating oil, an oil-soluble molybdenum compound substantially free of reactive sulfur, an oil-soluble diarylamine and a calcium phenate as an anti-wear and anti-oxidant additive.

U.S. Pat No. 6,509,303 relates to organic molybdenum complexes comprising the reaction products of fatty oils, a mono-alkylated alkylene diamine, and a molybdenum source, and their use as multifunctional additives for lubricating compositions.

U.S. Pat No. 6,914,037 relates to a process for producing organomolybdenum compositions with high molybdenum content for use as lubricant additives, in which the process involves reacting a fatty oil with a diamine, followed by reaction with a molybdenum source.

### SUMMARY OF THE INVENTION

It has now been discovered that the salts of (1) molybdenum oxides, sulfides, or oxysulfides and (2) an amide reaction product of a carboxylic acid component and a polyamine component wherein the charge mole ratio (CMR) of the carboxylic acid component to the polyamine component is from 2:1 to 1:1, wherein the carboxylic acid component is an aliphatic carboxylic acid and wherein the polyamine component is a polyalkylenepolyamine of the general formula H₂N(-R-NH)ₙ-H wherein R is an alkylene group of 2-3 carbon atoms and n is an integer of from 1 to 11, show excellent friction reducing properties.

One embodiment of the present invention is directed to an oil soluble additive composition comprising the salt of:
(1) a molybdenum component which is a molybdenum oxide, sulfide, or oxysulfide of the general formula MoOₓS_{y} wherein x≥0, y≥0, and 12≥ (x+y)≥2; and
(2) an amide wherein said amide comprises the reaction product of a carboxylic acid component and a polyamine component, wherein the charge mole ratio of the carboxylic acid component to the polyamine component is 2:1 to 1:1; wherein the oil soluble additive composition is sulfurized and has a mole ratio of molybdenum to sulfur of 1:1 to 1:8;
and further wherein the carboxylic acid component is an aliphatic carboxylic acid and wherein the polyamine component is a polyalkylenepolyamine of the general formula

H₂N(-R-NH)ₙ-H

wherein R is an alkylene group of 2-3 carbon atoms and n is an integer of from 1 to 11.

The present invention is also directed to a lubricating oil composition comprising:
(1) an oil of lubricating viscosity and
(2) an oil soluble additive composition comprising the salt of:
   (a) a molybdenum component which is a molybdenum oxide, sulfide, or oxysulfide of the general formula MoOₓS_{y} wherein x≥0, y≥0, and 12≥ (x+y)≥2; and
   (b) an amide wherein said amide comprises the reaction product of a carboxylic acid component and a polyamine component, wherein the charge mole ratio of the carboxylic acid component to the polyamine component is 2:1 to 1:1;
   wherein the oil soluble additive composition is sulfurized and has a mole ratio of molybdenum to sulfur of 1:1 to 1:8;
   and further wherein the carboxylic acid component is an aliphatic carboxylic acid and wherein the polyamine component is a polyalkylenepolyamine of the general formula

   H₂N(-R-NH)ₙ-H

   wherein R is an alkylene group of 2-3 carbon atoms and n is an integer of from 1 to 11.

Another embodiment of the present invention is directed to a process for preparing an oil soluble composition which comprises reacting:
(1) a molybdenum component which is, or is capable of forming, a molybdenum oxide, sulfide, or oxysulfide;
(2) an amide wherein said amide comprises the reaction product of a carboxylic acid component and a polyamine component, wherein the charge mole ratio of the carboxylic acid component to the polyamine component is 2:1 to 1:1, to form a molybdenum-containing reaction product; and
(3) a sulfur source in an amount such that the molybdenum-containing reaction product has a mole ratio of molybdenum to sulfur of 1:1 to 1:8;
and further wherein the carboxylic acid component is an aliphatic carboxylic acid and wherein the polyamine component is a polyalkylenepolyamine of the general formula

H₂N(-R-NH)ₙ-H

wherein R is an alkylene group of 2-3 carbon atoms and n is an integer of from 1 to 11. Preferably the molybdenum-containing reaction product is sulfurized to form the salt of a molybdenum oxysulfide or molybdenum sulfide and an amide.

In another embodiment, the present invention is directed to an oil soluble additive composition comprising the reaction product of:
(1) a molybdenum component which is, or is capable of forming, a molybdenum oxide, sulfide, or oxysulfide of the general formula MoOₓS_{y} wherein x≥0, y≥0, and 12≥ (x+y)≥2;
(2) an amide wherein said amide comprises the reaction product of a carboxylic acid component and a polyamine component, wherein the charge mole ratio of the carboxylic acid component to the polyamine component is 2:1 to 1:1; and
(3) a sulfur source in an amount such that the molybdenum containing reaction product has a mole ratio of molybdenum to sulfur of 1:1 to 1:8; wherein the carboxylic acid component is an aliphatic carboxylic acid and wherein the polyamine component is a polyalkylenepolyamine of the general formula

   H₂N(-R-NH)ₙ-H

   and wherein R is an alkylene group of 2-3 carbon atoms and n is an integer of from 1 to 11

### DETAILED DESCRIPTION OF THE INVENTION

While the invention is susceptible to various modifications and alternative forms, specific embodiments thereof and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

### Definitions

The following terms will be used throughout the specification and will have the following meanings unless otherwise indicated.

The term "polyamines" refers to organic compounds containing more than one basic nitrogen. The organic portion of the compound may contain aliphatic, cyclic, or aromatic carbon atoms.

The term "polyalkyleneamines" or "polyalkylenepolyamines" refers to compounds represented by the general formula

H₂N(-R-NH)ₙ-H

wherein R is an alkylene group of preferably 2-3 carbon atoms and n is an integer of from about 1 to 11.

The term "amide" or "polyamide" refers to the reaction product of a carboxylic acid, carboxylate, anhydride of a carboxylic acid, or ester of a carboxylic acid and a polyamine.

The terms "molybdenum oxide," "molybdenum sulfide," and "molybdenum oxysulfide" refer to compounds of the general formula MoOₓS_{y} wherein x≥0, y≥0, and 12≥ (x+y)≥2.

The term "carboxylic acid component" refers to carboxylic acids, carboxylates, carboxylic anhydrides, and the esters of carboxylic acids.

The term "fatty acid" refers to a carboxylic acid component derived from or contained in an animal or vegetable fat or oil comprising an alkyl chain of from 4 to 22 carbon atoms with a terminal carboxyl group.

The precise molecular formula of the oil soluble additive composition of the invention comprising the salt of (1) a molybdenum oxide, sulfide, or oxysulfide and (2) an amide are not known with certainty; however, they are believed to be compounds in which molybdenum, whose valences are satisfied with atoms of oxygen and sulfur is either complexed by or the salt of one or more basic nitrogens of the amide used in the preparation of these additives.

### Molybdenum Component

The molybdenum component used to prepare the oil soluble additive composition of the present invention is a molybdenum containing compound which is a molybdenum oxide, sulfide, or oxysulfide having the general formula of MoOₓS_{y} wherein x ≥ 0, y ≥ 0 and 12 ≥ (x+y) ≥ 2. The molybdenum component can include molybdenum in any oxidation state. The molybdenum component useful in the preparation of the oil-soluble additive composition of the invention may be derived from molybdenum compounds including, but not limited to, molybdenum hexacarbonyl, molybdic acid, ammonium molybdate, sodium molybdate, potassium molybdate, other alkali metal molybdates, alkaline earth metal molybdates, MoOCl₄, MoO₂Br₂, and Mo₂O₃Cl₆. Other molybdenum components include molybdenum trioxide, ammonium tetrathiomolybdate, and molybdenum disulfide. Preferred molybdenum components are molybdenum trioxide and those components derived from molybdic acid and ammonium molybdate. A more preferred molybdenum component is molybdenum trioxide.

### Sulfur Source

Representative sulfur sources for preparing the molybdenum components of the oil soluble additive compositions of this invention include but are not limited to sulfur, hydrogen sulfide, sulfur monochloride, sulfur dichloride, phosphorus pentasulfide, R₂Sₓ where R is hydrocarbyl, preferably C₁-C₄₀ alkyl, and x is at least 2, inorganic sulfides and polysulfides such as (NH₄)₂Sₓ, where x is at least 1, thioacetamide, thiourea, and mercaptans of the formula RSH where R is as defined above. Also useful as sulfurizing agents are traditional sulfur-containing antioxidants such as wax sulfides and polysulfides, sulfurized olefins, sulfurized carboxylic acid esters and sulfurized ester-olefins, and sulfurized alkylphenols and the metal salts thereof.

Preferred sulfur sources are sulfur, hydrogen sulfide, phosphorus pentasulfide, R₂Sₓ where R is hydrocarbyl, preferably C₁ -C₁₀ alkyl, and x is at least 3, mercaptans wherein R is C₁ -C₁₀ alkyl, inorganic sulfides and polysulfides, thioacetamide, and thiourea. Most preferred sulfur sources are sulfur, hydrogen sulfide, phosphorus pentasulfide, and inorganic sulfides and polysulfides.

### Amide component

The amides used in the preparation of the oil soluble additive composition of the present invention are the reaction product of a carboxylic acid component and a polyamine component. In the reaction of the carboxylic acid component and the amine component to form the amide, the charge mole ratio of the carboxylic acid component to amine component is 2:1 to 1:1. Preferably the charge mole ratio of the carboxylic acid component to amine component is 1.7:1 to 1:1. In another embodiment, the charge mole ratio of the carboxylic acid component to amine component is about 1.5:1 to 1:1. In a further embodiment, the charge mole ratio is from about 1.7:1 to about 1.3:1.
In one embodiment, the amide is derived from 1) an aliphatic carboxylic acid component having from about 4 and 40 carbons and 2) a polyamine component having from about 2 and 10 nitrogens. In a preferred embodiment the carboxylic acid component is isostearic acid and the polyamine component is selected from the group consisting of tetraethylenepentamine, diethylenetriamine, ethylenediamine, and mixtures thereof.

The carboxylic acid component and polyamine component described herein below can be reacted to form amides prior to or during reaction with the molybdenum component. Amide compositions useful in the invention include those disclosed in U.S. Pat. No. 3,405,064. These compositions are ordinarily prepared by reacting a carboxylic acid, carboxylic acid salt, carboxylic acid anhydride, or carboxylic acid ester having at least 4 to about 40 carbon atoms and, if desired, having pendant aliphatic groups to render the molecule oil soluble, with a polyamine, such as an ethylene diamine, to give an amide. Preferred are those amides prepared from (1) an aliphatic monocarboxylic acid, such as isostearic acid, stearic acid or mixtures thereof and (2) an ethylene polyamine, such as tetraethylenepentamine, diethylenetriamine, ethylene diamine or mixtures thereof. Preferably, the amides useful in this invention will have at least one basic nitrogen.

### Carboxylic acid component

The carboxylic acid component used in the preparation of the oil soluble additive composition of the invention is an aliphatic carboxylic acid, preferably having from at least 4 to 100 carbon atoms, preferably from 4 to 60 carbon atoms, more preferred from 4 to 40 carbon atoms, and even more preferred from 10 to 30 carbon atoms. Examples of aliphatic carboxylic acids include fatty acids such as isostearic acid, stearic acid, lauric acid, myrstic acid, palmitic acid, and arachidic acid. A particularly preferred carboxylic acid component is isostearic acid.

### Polyamine component

The polyamine component used in the preparation of the oil soluble additive composition of the present invention is as defined in the appended claims.
The polyamine component used in the preparation of this invention are polyalkylenepolyamines and can be represented by the general formula

H₂N(-R-NH)ₙ-H

wherein R is an alkylene group of 2-3 carbon atoms and n is an integer of from 1 to 11.

Specific examples of polyalkylenepolyamines include, but are not limited to, diethylenetriamine, triethylenetetramine, tetraethylenepentamine, pentaethylenehexamine, hexaethyleneheptamine, heptaethyleneoctamine, octaethylenenonamine, nonaethylenedecamine, decaethyleneundecamine, undecaethylenedodecamine, dipropylenetriamine, tripropylenetetramine, tetrapropylenepentamine, pentapropylenehexamine, hexapropyleneheptamine, heptapropyleneoctamine, octapropylenenonamine, nonapropylenedecamine, decapropyleneundecamine, undecapropylenedodecamine, di(trimethylene)triamine, tri(trimethylene)tetramine, tetra(trimethylene)pentamine, penta(triethylene)hexamine, hexa(trimethylene)heptamine, hepta(trimethylene)octamine, octa(trimethylene)nonamine, nona(trimethylene)decamine, deca(trimethylene)undecamine and undeca(trimethylene)dodecamine.

### Method for Making the Oil Soluble Composition of the Present Invention

The preparation of this invention may be carried out by combining the molybdenum component and the amide component. A polar promoter can be optionally added to the reaction mixture. The amide component can be formed prior to reaction with the molybdenum component or in situ from a carboxylic acid component and a polyamine component. The reaction product of the molybdenum component and the amide is sulfurized by reacting with a sulfur component. The preparation of this invention may be carried out by combining the molybdenum component with the sulfur component to form a molybdenum sulfide or oxysulfide prior to addition of the amide component. In a preferred embodiment, the molybdenum component and the amide are reacted to form a salt of a molybdenum oxide and an amide followed by sulfuriztion with a sulfur component to form the salt of a molybdenum sulfide or oxysulfide and an amide. The order of addition of the reaction components is not critical. The reaction is ordinarily carried out at atmospheric pressure; however, higher or lower pressures may be used, if desired, using methods that are well-known to those skilled in the art. A diluent may be used to enable the reaction mixture to be efficiently stirred. Typical diluents are lubricating oil and liquid compounds containing only carbon and hydrogen. If the mixture is sufficiently fluid to permit satisfactory mixing, no diluent is necessary. A diluent which does not react with the molybdenum component is desirable.

Optionally, a polar promoter may be employed in the preparation of the present invention. The polar promoter facilitates the interaction between the molybdenum component and the basic nitrogen of the polyamine or amide component. A wide variety of such promoters may be used. Typical promoters are 1,3-propanediol, 1,4-butanediol, diethylene glycol, butyl cellosolve, propylene glycol, 1,4-butyleneglycol, methyl carbitol, ethanolamine, diethanolamine, N-methyl-diethanol-amine, dimethyl formamide, N-methyl acetamide, dimethyl acetamide, ammonium hydroxides, tetraalkyl ammonium hydroxides, alkali metal hydroxides, methanol, ethylene glycol, dimethyl sulfoxide, hexamethyl phosphoramide, tetrahydrofuran, acetic acid, inorganic acids, and water. Preferred are water and ethylene glycol. Particularly preferred is water.

While ordinarily the polar promoter is separately added to the reaction mixture, it may also be present, particularly in the case of water, as a component of non-anhydrous starting materials or as waters of hydration in the molybdenum component, such as (NH₄)₆Mo₇O₂₄ .4H₂O. Water may also be added as ammonium hydroxide.

A general method for preparing the oil soluble additive compositions of this invention comprises reacting (1) a molybdenum component and (2) an amide of a carboxylic acid and a polyamine in which the carboxylic acid and polyamine have a charge mole ratio (CMR) of between 2:1 to 1:1. Optionally, (3) a polar promoter or (4) a diluent, to form a salt or (5) both a polar promoter and a diluent may be added. The diluent is used, if necessary, to provide a suitable viscosity to facilitate mixing and handling. Typical diluents are lubricating oil and liquid compounds containing only carbon and hydrogen. Optionally, ammonium hydroxide may also be added to the reaction mixture to provide a solution of ammonium molybdate. The molybdenum component, amide, polar promoter, if used, and diluent, if used, are charged to a reactor and heated at a temperature less than or equal to about 200°C, preferably from about 70°C to about 120°C. The temperature is maintained at a temperature less than or equal to about 200°C, preferably at about 70°C to about 90°C, until the molybdenum component is sufficiently reacted. The reaction time for this step is typically in the range of from about 1 to about 30 hours and preferably from about 1 to about 10 hours.

Typically excess water and any volatile diluents are removed from the reaction mixture. Removal methods include, but are not limited to, vacuum distillation or nitrogen stripping while maintaining the temperature of the reactor at a temperature less than or equal to about 200°C, preferably between about 70°C to about 90°C. The removal of water and volatile diluents is ordinarily carried out under reduced pressure. The pressure may be reduced incrementally to avoid problems with foaming. After the desired pressure is reached, the stripping step is typically carried out for a period of about 0.5 to about 5 hours and preferably from about 0.5 to about 2 hours.

The reaction mixture is further reacted with a sulfur component as defined above, preferably at a suitable pressure and temperature not to exceed 200°C. The sulfurization step is typically carried out for a period of from about 0.5 to about 5 hours and preferably from about 0.5 to about 2 hours. In some cases, removal of the polar promoter from the reaction mixture may be desirable prior to completion of reaction with the sulfur component.

The sulfur component is usually charged to the reaction mixture in such a ratio to provide up to 12 atoms of sulfur per atom of molybdenum. The oil soluble composition of the invention will have a mole ratio of molybdenum to sulfur of 1:1 to 1:8. In an embodiment the ratio of molybdenum to sulfur is about 1:0 to 1:4. In a further embodiment, the ratio of molybdenum to sulfur is about 1:1 to 1:4.

In the reaction mixture the ratio of molybdenum atoms to basic nitrogen atoms provided by the amide can range from about 0.01 to 4.0 atoms of molybdenum per basic nitrogen atom. Usually the reaction mixture is charged from 0.01 to 2.00 atoms of molybdenum per basic nitrogen atom provided by the amide. Preferably from 0.4 to 1.0, and most preferably from 0.4 to 0.7, atoms of molybdenum per atom of basic nitrogen is added to the reaction mixture.

The polar promoter, which is preferably water, is ordinarily present in the ratio of 0.1 to 50 moles of water per mol of molybdenum. Preferably from 0.5 to 25 and most preferably 1.0 to 15 moles of the promoter is present per mole of molybdenum.

The charge mole ratio of the carboxylic acid component to polyamine is critical and can range from 2:1 to 1:1. In one embodiment the charge mole ratio is from 1.7:1 to 1:1. In another embodiment the charge mole ratio is from about 1.5:1 to 1:1. In a further embodiment the charge mole ratio is from about 1.7:1 to 1.3:1.The amide formed from the reaction of the carboxylic acid component and the polyamine may occur prior to, during, or after the introduction of the molybdenum component to the reaction mixture.

### Additive Concentrates

In many instances, it may be advantageous to form concentrates of the oil soluble additive composition of the present invention within a carrier liquid. These additive concentrates provide a convenient method of handling, transporting, and ultimately blending into lubricant base oils to provide a finished lubricant. Generally, the oil soluble additive concentrates of the invention are not useable or suitable as finished lubricants on their own. Rather, the oil soluble additive concentrates are blended with lubricant base oil stocks to provide a finished lubricant. It is desired that the carrier liquid readily solubilizes the oil soluble additive of the invention and provides an oil additive concentrate that is readily soluble in the lubricant base oil stocks. In addition, it is desired that the carrier liquid not introduce any undesirable characteristics, including, for example, high volatility, high viscosity, and impurities such as heteroatoms, to the lubricant base oil stocks and thus, ultimately to the finished lubricant. Thus, described is an oil soluble additive concentrate composition comprising an inert carrier fluid and from 2.0 % to 90% by weight, based on the total concentrate, of an oil soluble additive composition according to the invention. The inert carrier fluid may be a lubricating oil.

These concentrates usually contain from about 2.0% to about 90% by weight, preferably 10% to 50% by weight of the oil soluble additive composition of this invention and may contain, in addition, one or more other additives known in the art and described below. The remainder of the concentrate is the substantially inert carrier liquid.

### Lubricating oil compositions

In one embodiment of the invention, the oil soluble additive composition of the present invention can be mixed with a base oil of lubricating viscosity to form a lubricating oil composition. The lubricating oil composition comprises a major amount of a base oil of lubricating viscosity and a minor amount of the oil soluble additive composition of the present invention described above.

The lubricating oil which may be used in this invention includes a wide variety of hydrocarbon oils, such as naphthenic bases, paraffin bases and mixed base oils as well as synthetic oils such as esters and the like. The lubricating oils which may be used in this invention also include oils from biomass such as plant and animal derived oils. The lubricating oils may be used individually or in combination and generally have viscosity which ranges from 7 to 3,300 cSt and usually from 20 to 2000 cSt at 40°C. Thus, the base oil can be a refined paraffin type base oil, a refined naphthenic base oil, or a synthetic hydrocarbon or non-hydrocarbon oil of lubricating viscosity. The base oil can also be a mixture of mineral and synthetic oils. Mineral oils for use as the base oil in this invention include, for example, paraffinic, naphthenic and other oils that are ordinarily used in lubricating oil compositions. Synthetic oils include, for example, both hydrocarbon synthetic oils and synthetic esters and mixtures thereof having the desired viscosity. Hydrocarbon synthetic oils may include, for example, oils prepared from the polymerization of ethylene, i.e., polyalphaolefin or PAO, or from hydrocarbon synthesis procedures using carbon monoxide and hydrogen gases such as in a Fisher-Tropsch process. Useful synthetic hydrocarbon oils include liquid polymers of alpha olefins having the proper viscosity. Likewise, alkyl benzenes of proper viscosity, such as didodecyl benzene, can be used. Useful synthetic esters include the esters of monocarboxylic acids and polycarboxylic acids, as well as mono-hydroxy alkanols and polyols, Typical examples are didodecyl adipate, pentaerythritol tetracaproate, di-2-ethylhexyl adipate, dilaurylsebacate, and the like. Complex esters prepared from mixtures of mono and dicarboxylic acids and mono and dihydroxy alkanols can also be used. Blends of mineral oils with synthetic oils are also useful.

The lubricating oil compositions containing the oil soluble additives of this invention can be prepared by admixing, by conventional techniques, the appropriate amount of the oil soluble additives of the invention with a lubricating oil. The selection of the 13 particular base oil depends on the contemplated application of the lubricant and the presence of other additives. Generally, the amount of the oil soluble additive of the invention in the lubricating oil composition of the invention will vary from 0.05 to 15% by weight and preferably from 0.2 to 1% by weight, based on the total weight of the lubricating oil composition. In one embodiment, the molybdenum content of the lubricating oil composition will be between 50 parts per million (ppm) and 5000 ppm, preferably between about 90 ppm to 1500 ppm. In another embodiment the molybdenum content of the lubricating oil composition will be between about 500 ppm and 700 ppm.

### Additional Additives

If desired, other additives may be included in the lubricating oil and lubricating oil concentrate compositions of this invention. These additives include antioxidants or oxidation inhibitors, dispersants, rust inhibitors, anticorrosion agents and so forth. Also, anti-foam agents, stabilizers, anti-stain agents, tackiness agents, anti-chatter agents, dropping point improvers, anti-squawk agents, extreme pressure agents, odor control agents and the like may be included.

The following additive components are examples of some of the components that can be favorably employed in the lubricating oil compositions of the present invention. These examples of additional additives are provided to illustrate the present invention, but they are not intended to limit it:

### Metal Detergents

Detergents which may be employed in the present invention include alkyl or alkenyl aromatic sulfonates, calcium phenate, borated sulfonates, sulfurized or unsulfurized metal salts of multi-hydroxy alkyl or alkenyl aromatic compounds, alkyl or alkenyl hydroxy aromatic sulfonates, sulfurized or unsulfurized alkyl or alkenyl naphthenates, metal salts of alkanoic acids, metal salts of an alkyl or alkenyl multiacid, and chemical and physical mixtures thereof.

### Anti-Wear Agents

As their name implies, these agents reduce wear of moving metallic parts. Examples of such agents include, but are not limited to, zinc dithiophosphates, carbarmates, esters, and molybdenum complexes.

### Rust Inhibitors (Anti-Rust Agents)

Anti-rust agents reduce corrosion on materials normally subject to corrosion. Examples of anti-rust agents include, but are not limited to, nonionic polyoxyethylene surface active agents such as polyoxyethylene lauryl ether, polyoxyethylene higher alcohol ether, polyoxyethylene nonyl phenyl ether, polyoxyethylene octyl phenyl ether, polyoxyethylene octyl stearyl ether, polyoxyethylene oleyl ether, polyoxyethylene sorbitol monostearate, polyoxyethylene sorbitol mono-oleate, and polyethylene glycol mono-oleate. Other compounds useful as anti-rust agents include, but are not limited to, stearic acid and other fatty acids, dicarboxylic acids, metal soaps, fatty acid amine salts, metal salts of heavy sulfonic acid, partial carboxylic acid ester of polyhydric alcohol, and phosphoric ester.

### Demulsifiers

Demulsifiers are used to aid the separation of an emulsion. Examples of demulsifiers include, but are not limited to, block copolymers of polyethylene glycol and polypropylene glycol, polyethoxylated alkylphenols, polyesteramides, ethoxylated alkylphenol-formaldehyde resins, polyvinylalcohol derivatives and cationic or anionic polyelectrolytes. Mixtures of different types of polymers may also be used.

### Friction Modifiers

Additional friction modifiers may be added to the lubricating oil of the present invention. Examples of friction modifiers include, but are not limited to, fatty alcohols, fatty acids, amines, ethoxylated amines, borated esters, other esters, phosphates, phosphites and phosphonates.

### Multifunctional Additives

Additives with multiple properties such as anti-oxidant and anti-wear properties may also be added to the lubricating oil of the present invention. Examples of multifunctional additives include, but are not limited to, sulfurized oxymolybdenum dithiocarbamate, sulfurized oxymolybdenum organo phosphorodithioate, oxymolybdenum monoglyceride, oxymolybdenum diethylate amide, amine-molybdenum complexes, and sulfur-containing molybdenum complexes.

### Viscosity Index Improvers

Viscosity index improvers, also known as viscosity modifiers, comprise a class of additives that improve the viscosity-temperature characteristics of the lubricating oil, making the oil's viscosity more stable as its temperature changes. Viscosity index improvers may be added to the lubricating oil composition of the present invention. Examples of viscosity index improvers include, but are not limited to, polymethacrylate type polymers, ethylene-propylene copolymers, styrene-isoprene copolymers, alkaline earth metal salts of phosphosulfurized polyisobutylene, hydrated styrene-isoprene copolymers, polyisobutylene, and dispersant type viscosity index improvers.

### Pour Point Depressants

Pour point depressants are polymers that are designed to control wax crystal formation in lubricating oils resulting in lower pour point and improved low temperature flow performance. Examples of pour point depressants include, but are not limited to, polymethyl methacrylate, ethylene vinyl acetate copolymers, polyethylene polymers, and alkylated polystyrenes.

### Foam Inhibitors

Foam inhibitors are used to reduce the foaming tendencies of the lubricating oil. Examples of foam inhibitors include, but are not limited to, alkyl methacrylate polymers, alkylacrylate copolymers, and polymeric organosiloxanes such as dimethylsiloxane polymers.

### Metal Deactivators

Metal deactivators create a film on metal surfaces to prevent the metal from causing the oil to be oxidized. Examples of metal deactivators include, but are not limited to, disalicylidene propylenediamine, triazole derivatives, thiadiazole derivatives, bis-imidazole ethers, and mercaptobenzimidazoles.

### Dispersants

Dispersants diffuse sludge, carbon, soot, oxidation products, and other deposit precursors to prevent them from coagulating resulting in reduced deposit formation, less oil oxidation, and less viscosity increase. Examples of dispersants include, but are not limited to, alkenyl succinimides, alkenyl succinimides modified with other organic compounds, alkenyl succinimides modified by post-treatment with ethylene carbonate or boric acid, alkali metal or mixed alkali metal, alkaline earth metal borates, dispersions of hydrated alkali metal borates, dispersions of alkaline-earth metal borates, polyamide ashless dispersants and the like or mixtures of such dispersants.

### Anti-Oxidants

Anti-oxidants reduce the tendency of mineral oils to deteriorate by inhibiting the formation of oxidation products such as sludge and varnish-like deposits on the metal surfaces. Examples of anti-oxidants useful in the present invention include, but are not limited to, phenol type (phenolic) oxidation inhibitors, such as 4,4'-methylene-bis(2,6-di-tert-butylphenol), 4,4'-bis(2,6-di-tert-butylphenol), 4,4'-bis(2-methyl-6-tert-butylphenol), 2,2'-methylene-bis(4-methyl-6-tert-butylphenol), 4,4'-butylidene-bis(3-methyl-6-tert-butylphenol), 4,4'-isopropylidene-bis(2.6-di-tert-butylphenol), 2,2'-methylene-bis(4-methyl-6-nonylphenol), 2.2'-isobutylidene-bis(4.6-dimethylpbenol). 2,2'-5-methylene-bis(4-methyl-6-cyclohexylphenol), 2,6-di-tert-butyl-4-methylphenol, 2,6-di-tert-butyl-4-ethylphenol, 2,4-dimethyl-6-tert-butyl-phenol. 2,6-di-tert-1-dimethylamino p-cresol, 2,6-di-tert-4-(N,N'-dimethylaminomethylphenol), 4,4'-thiobis(2-methyl-6-tert-butylphenol), 2,2'-thiobis(4-methyl-6-tert-butylphenol), bis(3-methyl-4-hydroxy-5-tert-10-butylbenzyl)-sulfide, and bis(3,5-di-tert-butyl-4-hydroxybenzyl). Diphenylamine-type oxidation inhibitors include, but are not limited to, alkylated diphenylamine, phenyl-alpha-naphthylamine, and alkylated-alpha-naphlhylamine. Other types of oxidation inhibitors include metal dithiocarbamate (e.g.. zinc dithiocarbamate), and methylenebis(dibutyldithiocarbamate).

### Applications

Lubricating oil compositions containing the oil soluble additive compositions disclosed herein are effective as either fluid and grease compositions for modifying the friction properties of the lubricating oil which may, when used as a crankcase lubricant, lead to improved mileage for the vehicle being lubricated with a lubricating oil of this invention.

The lubricating oil compositions of this invention may be used in marine cylinder lubricants as in crosshead diesel engines, crankcase lubricants as in automobiles and railroads, lubricants for heavy machinery such as steel mills and the like, or as greases for bearings and the like. Whether the lubricant is fluid or solid will ordinarily depend on whether a thickening agent is present. Typical thickening agents include polyurea acetates, lithium stearate and the like. The oil soluble additive composition of the invention may also find utility as an anti-oxidant, anti-wear additive in explosive emulsion formulations.

### Additional Applications

The oil soluble additive compositions of the invention can be envisioned as hydrotreating catalyst precursors in addition to their use as lubricating oil additives. The oil soluble additive compositions of the invention can act as a catalyst precursor and can be contacted with hydrocarbons and decomposed, in the presence of hydrogen and sulfur or sulfur-bearing compounds to form an active catalyst for hydrotreating a hydrocarbonaceous feedstock. The oil soluble additive compositions of the invention can be heated to the decomposition temperature and decomposed in the presence of hydrogen a hydrocarbon, and sulfur or sulfur-bearing compounds, e,g., at "on-oil" conditions, to form the active catalyst species for hydrotreating.

The nature of the hydrocarbon is not critical, and can generally include any hydrocarbon compound, acyclic or cyclic, saturated or unsaturated, unsubstituted or inertly substituted. The preferred hydrocarbons are those which are liquid at ordinary temperatures, exemplary of which are such straight chain saturated acyclic hydrocarbons as octane, tridecane, eicosane, nonacosane, or the like; straight chain unsaturated acyclic hydrocarbons as 2-hexene, 1,4-hexadiene, and the like; branched chain saturated acyclic hydrocarbons as 3-methylpentane, neopentane, isohexane, 2,7,8-triethyldecane, and the like; branched chain unsaturated acyclic hydrocarbons such as 3,4-dipropyl-1,3-hexadiene-5-yne, 5,5-dimethyl-1-hexene, and the like; cyclic hydrocarbons, saturated or unsaturated, such as cyclohexane, 1,3-cyclohexadiene, and the like; and including such aromatics as cumene, mesitylene, styrene, toluene, o-xylene, or the like. The more preferred hydrocarbons are those derived from petroleum, including especially admixtures of petroleum hydrocarbons characterized as virgin naphthas, cracked naphthas, Fischer-Tropsch naphtha, light cycle oil, medium cycle oil, heavy cycle oil, and the like, typically those containing from about 5 to about 30 carbon atoms, preferably from about 5 to about 20 carbon atoms and boiling within a range of from about 30°C to about 450°C, preferably from about 150°C to about 300°C. In decomposing the oil soluble additive compositions of the invention to form a hydrotreating catalyst, a packed bed containing the oil soluble additive compositions of the invention is contacted in a hydrogen atmosphere with both the hydrocarbon and sulfur or sulfur-bearing compound and heated at conditions which decompose said oil soluble additive compositions of the invention.

The sulfur or sulfur-bearing compound is characterized as an organo-sulfur or hydrocarbyl-sulfur compound, which contains one or more carbon-sulfur bonds within the total molecule, and generally includes acyclic or cyclic, saturated or unsaturated, substituted or inertly substituted compounds. Exemplary of acyclic compounds of this character are ethyl sulfide, n-butyl sulfide, n-hexylthiol, diethylsulfone, allyl isothiocyanate, dimethyl disulfide, ethylmethylsulfone, ethylmethylsulfoxide, and the like; cyclic compounds of such character are methylthiophenol, dimethylthiophene, 4-mercaptobenzoic acid, benzenesulfonic acid, 5-formamido-benzothiazole, 1-naphthalenesulfonic acid, dibenzylthiophene, and the like. The sulfur must be present in at least an amount sufficient to provide the desired stoichiometry required for the catalyst, and preferably is employed in excess of this amount. Suitably, both the hydrocarbon and sulfur for the reaction can be supplied by the use of a sulfur-containing hydrocarbon compound, e.g., a heterocyclic sulfur compound, or compounds. Exemplary of heterocyclic sulfur compounds suitable for such purpose are thiophene, dibenzothiophene, tetraphenyithiophene, tetramethyldibenzothiophene, tetrahydrodibenzothiophene, thianthrene, tetramethylthianthrene, and the like. The hydrogen required for forming the catalysts of this invention may be pure hydrogen, an admixture of gases rich in hydrogen or a compound which will generate in situ hydrogen, e.g., a hydrogen-generating gas such as carbon monoxide mixtures with water, or a hydrogen donor solvent.

The following examples are presented to illustrate specific embodiments of this invention and are not to be construed in any way as limiting the scope of the invention

### EXAMPLES

### Example 1 (Comparative)

### Salt of MoOₓS_{y} and Isostearic Acid (ISA)/Tetraethylene Pentamine (TEPA) Polyamide

### ISA/TEPA CMR = 3.15:1

A round-bottom flask was charged with a polyamide of isostearic acid and tetraethylenepentamine (280 g, ISA/TEPA CMR = 3.15), diluent oil (Exxon 100N, 90 g) and toluene (100 mL). Molybdenum trioxide (17.5 g, 0.12 mole) and water (25 g) were then added to the flask. The solution was heated at 70-90°C for 3-4 hours. Sulfur (15 g, 0.46 mole) was then added to the solution and the mixture was heated at 100°C for an additional 2 hours. The water and toluene were removed under vacuum. Analysis of the final product found the following: Mo = 2.9 wt %; S = 3.8 wt %.

### Example 2

### Salt of MoOₓS_{y} Isostearic Acid (ISA)/Tetraethylenepentamine (TEPA) Polyamide

### ISA/TEPA CMR = 1.3:1

A round bottom flask was charged with a polyamide of isostearic acid and tetraethylenepentamine (10 g, ISA/TEPA CMR = 1.3), diluent oil (Exxon 100N, 6.6 g) and toluene (40 mL). Molybdenum trioxide (1.3 g, 0.009 mole) and water (2 g) were then added to the flask. The solution was heated at 70-90°C for 3-4 hours. Sulfur (0.55g, 0.017 mole) was then added to the solution and the mixture was heated at 100°C for an additional 2 hours. The water and toluene were removed under vacuum. Analysis of the final product found the following: Mo = 4,0 wt %; S = 3 wt %.

### Example 3

### Salt of MoOₓS_{y} Isostearic Acid (ISA)/Diethylenetriamine (DETA) Polyamide

### ISA/DETA CMR = 1.7:1

A round-bottom flask was charged with a polyamide of isostearic acid and diethylenetriamine (250 g, ISA/DETA CMR = 1.7), diluent oil (Exxon 100N, 363 g) and toluene (200 mL). Molybdenum trioxide (46.3 g, 0.32 mole) and water (25 g) were then added to the flask. The solution was heated at 70-90°C for 3-4 hours, Ammonium sulfide (54.85 mL of a 42 wt % aqueous solution) was then added to the solution and the mixture was heated at 100°C for an additional 2 hours. The water and toluene were removed under vacuum. Analysis of the final product found the following: Mo = 3.56 wt %; S = 2.03 wt %.

### Example 4

### Salt of MoOₓS_{y} Isostearic Acid (ISA)/Diethylenetriamine (DETA) Polyamide

### ISA/DETA CMR = 1.3:1

A round-bottom flask was charged with a polyamide of isostearic acid and dietheylenetriamine (400 g, ISA/DETA CMR = 1.3), diluent oil (Exxon 100N, 385 g) and toluene (200 mL). Molybdenum trioxide (52.1 g, 0.36 mole) and water (40 g) were then added to the flask. The solution was heated at 70-90°C for 3-4 hours. Sulfur (23.2 g, 0.72 mole) was then added to the solution and the mixture was heated at 100°C for an additional 2 hours. The water and toluene were removed under vacuum. Analysis of the final product found the following: Mo = 3.6 wt %.

### Example 5

### Salt of MoOₓS_{y} Isostearic Acid (ISA)/Ethylenediamine (EDA) Polyamide

### ISA/EDA CMR = 1.0:1

A round-bottom flask was charged with a polyamide of ethylenediamine and isostearic acid (118 g, ISA/EDA CMR = 1.0), diluent oil (Exxon 100N, 272 g) and toluene (360 mL). Molybdenum trioxide (18.9 g, 0,13 mole) and water (12 g) were then added to the flask. The solution was heated at 70-90°C for 3-4 hours. Sulfur (8.4 g, 0.26 mole) was then added to the solution and the mixture was heated at 100°C for an additional 2 hours. The water and toluene were removed under vacuum. Analysis of the final product found the following: Mo = 3,0 wt %.

### Lubricating Oil Compositions

Lubricating oil compositions containing salts of MoOₓS_{y} and isostearic acid/polyamine amides were prepared from Examples 1 through 5 according to the following formulation:
(1) A salt of MoOₓS_{y} and isostearic acid/polyamine amide (Mo content = 500 ppm in each formulation)
(2) 4 wt % of an ashless dispersant
(3) 3,01 wt % of alkaline earth metal carboxylate detergent
(4) 0.60 wt % of alkaline earth metal sulfonate detergent
(5) 0,62 wt % of a zinc dialkyldithiophosphate
(6) 1.2 wt % of an antioxidant
(7) 4.3 wt % of a non-dispersant type viscosity index improver
(8) 5 ppm of a foam inhibitor
(9) The remainder was a lubricating oil

### Example 6 (Comparative)

### Lubricating Oil Composition Containing Molybdenum Dithiocarbamate

A lubricating oil composition was prepared in accordance with the above formulations except that 0.82 wt % of a molybdenum dithiocarbamate (available as "Sakura Lube 505" from AdekaUSA Corporation, Saddle River, New Jersey) served as the sole molybdenum source for this lubricating oil composition. The Mo content = 500 ppm.

### Example 7 (Comparative)

### Lubricating Oil Composition Containing Molybdenum Oxysulfide/Monosuccinimide Complex

A lubricating oil composition was prepared in accordance with the above formulationexcept that 500 ppm of a molybdenum oxysulfide-monosuccinimide complex, derived from a polyisobutenyl (having a molecular weight of about 1000) monosuccinimide, as described in King et al, U.S. Pat. No. 4,263,152, served as the sole molybdenum source for this lubricating oil composition.

The compositions described above were tested for friction performance in a Mini-Traction Machine (MTM) bench test. The MTM is manufactured by PCS Instruments and operates in the pin-on-disk configuration in which a stainless steel ball (6 mm) is loaded against a rotating disk (32100 steel). The conditions employ a load of 10 Newtons, a speed of 500 mm/s, temperature of 120°C and has a run-time of 60 minutes. The results are averaged for the last 10 minutes and are summarized in the Table 1.

**Table 1.**

| Example | Description | CMR (ISA:Polyamine) | Coefficient of Friction (COF) (Last 10 Min Average) |
|---|---|---|---|
| 1 | MoOₓS_{y}/ISA/TEPA polyamide | 3.15 | 0.069 |
| 2 | MoOₓS_{y}/ISA/TEPA polyamide | 1.3 | 0.045 |
| 3 | MoOₓS_{y}/ISA/DETA polyamide | 1.7 | 0.049 |
| 4 | MoOₓS_{y}/ISA/DETA polyamide | 1.3 | 0,044 |
| 5 | MoOₓS_{y}/ISA/EDA amide | 10 | 0.042 |
| 6 | MoDTC | -- | 0.044 |
| 7 | MoOₓS_{y}-succinimide | -- | 0.104 |

Examples 2-5 in Table 1 show that the coefficient of friction (wherein the lower the COF, the better the friction reducing properties) of the lubricating oil composition of the present invention is comparable to that of molybdenum dithiocarbamate, a well known friction reducer, when the salt of the molybdenum component and the carboxylic acid/polyamine component had a carboxylic acid: polyamine CMR of from about 2:1 to about 1:1, Examples 2-5 also exhibit superior friction reducing properties as compared to a molybdenum succinimide complex (e.g., Example 7). Moreover, Examples 2-5 show better friction reducing properties than Example 1 (comparative), which comprises a lubricating oil additive which had an ISA:TEPA CMR of 3.15:1 As evidenced by the data in Table 1, friction reducing properties are improved when the CMR of isostearic acid to polyalkylene polyamine is lowered.

## Claims

1. An oil soluble additive composition comprising a salt of:
(1) a molybdenum component which is a molybdenum oxide, sulfide, or oxysulfide of the general formula MoOₓS_{y} wherein x≥0, y≥0, and 12≥ (x+y)≥2; and
(2) an amide wherein said amide comprises the reaction product of a carboxylic acid component and a polyamine component, wherein the charge mole ratio of the carboxylic acid component to the polyamine component is 2:1 to 1:1;
wherein the oil soluble additive composition is sulfurized and has a mole ratio of molybdenum to sulfur of 1:1 to 1:8;
and further wherein the carboxylic acid component is an aliphatic carboxylic acid and wherein the polyamine component is a polyalkylenepolyamine of the general formula
H₂N(-R-NH)ₙ-H
wherein R is an alkylene group of 2-3 carbon atoms and n is an integer of from 1 to 11.

2. The oil soluble additive composition of claim 1, wherein the amide contains at least one basic nitrogen.

3. The oil soluble additive composition of claim 1, wherein the charge mole ratio of the carboxylic acid component to the polyamine component is 1.7:1 to 1:1.

4. A lubricating oil composition comprising:
an oil of lubricating viscosity and
an oil soluble additive composition as claimed in claim 1.

5. The lubricating oil composition of claim 4, wherein the molybdenum content the lubricating oil composition contains 50 ppm and 5000 ppm of the molybdenum component.

6. The lubricating oil composition of claim 4, wherein the oil soluble additive composition content is between 0.05 to 15% by weight.

7. A process for preparing an oil soluble additive composition which comprises reacting:
(1) a molybdenum component which is a molybdenum oxide, sulfide, or oxysulfide;
(2) an amide wherein said amide comprises the reaction product of a carboxylic acid component and a polyamine component, wherein the charge mole ratio of the carboxylic acid component to the polyamine component is 2:1 to 1:1 to form a molybdenum-containing reaction product; and
(3) a sulfur source in an amount such that the molybdenum-containing reaction product has a mole ratio of molybdenum to sulfur of 1:1 to 1:8;
and further wherein the carboxylic acid component is an aliphatic carboxylic acid and wherein the polyamine component is a polyalkylenepolyamine of the general formula
H₂N(-R-NH)ₙ-H
wherein R is an alkylene group of 2-3 carbon atoms and n is an integer of from 1 to 11.

8. The process according to claim 7, wherein the molybdenum component is derived from molybdenum hexacarbonyl, molybdic acid, ammonium molybdate, alkali metal molybdates including sodium molybdate and potassium molybdate, alkaline earth metal molybdates, MoOCl₄, MoO₂Br₂, Mo₂O₃Cl₆, molybdenum trioxide, ammonium tetrathiomolybdate, or molybdenum disulfide.

9. The process of claim 7 or 8, wherein said reaction of said molybdenum component and said amide is in the presence of a polar promoter.

10. The process of claim 7 or 8, wherein the sulfurization is carried out with a sulfur source selected from sulfur, hydrogen sulfide, phosphorus pentasulfide, R₂Sₓ where R is hydrocarbyl, and x is at least 2, inorganic sulfides or inorganic polysulfides, thioacetamide, thiourea, mercaptans of the formula RSH where R is hydrocarbyl, or a sulfur-containing antioxidant.

11. A product prepared by the process of Claim 7 or 8.

12. An oil soluble additive composition comprising the reaction product of:
(1) a molybdenum component which is a molybdenum oxide, sulfide, or oxysulfide of the general formula MoOₓS_{y} wherein x≥0, y≥0, and 12≥(x+y)>2t;
(2) an amide wherein said amide comprises the reaction product of a carboxylic acid component and a polyamine component, wherein the charge mole ratio of the carboxylic acid component to the polyamine component is about 2:1 to 1:1; and
(3) a sulfur source in an amount such that the molybdenum containing reaction product has a mole ratio of molybdenum to sulfur of 1:1 to 1:8
wherein the carboxylic acid component is an aliphatic carboxylic acid and wherein the polyamine component is a polyalkylenepolyamine of the general formula
H₂N(-R-NH)ₙ-H
and wherein R is an alkylene group of 2-3 carbon atoms and n is an integer of from 1 to 11.

13. The oil soluble additive composition according to claim 12, wherein the molybdenum component is derived from molybdenum hexacarbonyl, molybdic acid, ammonium molybdate, alkali metal molybdates including sodium molybdate and potassium molybdate, alkaline earth metal molybdates, MoOCl₄, MoO₂Br₂, Mo₂O₃Cl₆, molybdenum trioxide, ammonium tetrathiomolybdate, or molybdenum disulfide.

14. Use of an oil soluble additive composition according to any one of Claims 1-3 and 12-13 for reducing friction in a lubricating oil composition comprising an oil of lubricating viscosity.

15. Use according to claim 14, wherein said additive is present in an amount from 0.05 to 15 % by weight, based on the total weight of the lubricating oil composition.

## Patentansprüche

1. Öllösliche Zusatzmittelzusammensetzung, umfassend ein Salz aus
(1) einer Molybdänkomponente, die ein Molybdänoxyd, -sulfid, oder -oxysulfid der Allgemeinformel MoOxSy ist, wobei x ≥ 0, y ≥ 0 und 12 ≥ (x+y) ≥2; und
(2) einem Amid, wobei das Amid das Reaktionsprodukt aus einer Carbonsäurekomponente und einer Polyaminkomponente umfasst, wobei das Ladungsmolverhältnis der Carbonsäurekomponente zur Polyaminkomponente 2:1 bis 1:1 ist;
wobei die öllösliche Zusatzmittelzusammensetzung geschwefelt ist und ein Molarverhältnis von Molybdän zu Schwefel von 1:1 bis 1:8 hat;
und zudem wobei die Carbonsäurekomponente eine aliphatische Carbonsäure ist und wobei die Polyaminkomponente ein Polyalkylenpolyamin der Allgemeinformel
ist, worin R eine Alkylengruppe mit 2 bis 3 Kohlenstoffatomen ist und n eine Ganzzahl von 1 bis 11 ist.

2. Öllösliche Zusatzmittelzusammensetzung gemäß Anspruch 1, wobei das Amid mindestens einen basischen Stickstoff enthält.

3. Öllösliche Zusatzmittelzusammensetzung gemäß Anspruch 1, wobei das Ladungsmolverhältnis der Carbonsäurekomponente zur Polyaminkomponente 1,7:1 bis 1:1 ist.

4. Schmierölzusammensetzung, umfassend
ein Öl mit Schmierviskosität und
eine öllösliche Zusatzmittelzusammensetzung aus Anspruch 1.

5. Schmierölzusammensetzung gemäß Anspruch 4, wobei der Molybdängehalt der Schmierölzusammensetzung von 50 ppm bis 5000 ppm der Molybdänkomponente enthält.

6. Schmierölzusammensetzung gemäß Anspruch 4, wobei die öllösliche Zusatzmittelzusammensetzung zwischen 0,05 und 15 Gew.-% ist.

7. Herstellungsverfahren für eine öllösliche Zusatzmittelzusammensetzung, umfassend Reagieren von
(1) einer Molybdänkomponente, die ein Molybdänoxyd, -sulfid, oder -oxysulfid ist;
(2) einem Amid, wobei das Amid das Reaktionsprodukt aus einer Carbonsäurekomponente und einer Polyaminkomponente umfasst, wobei das Ladungsmolverhältnis der Carbonsäurekomponente zur Polyaminkomponente 2:1 bis 1:1 ist, zum Bilden eines molybdänhaltigen Reaktionsproduktes; und
(3) einer Schwefelquelle in einer Menge, so dass das molybdänhaltige Reaktionsprodukt ein Molarverhältnis von Molybdän zu Schwefel von 1:1 bis 1:8 hat;
und zudem wobei die Carbonsäurekomponente eine aliphatische Carbonsäure ist und wobei die Polyaminkomponente ein Polyalkylenpolyamin der Allgemeinformel
H₂N(-R-NH)ₙ-H
ist, worin R eine Alkylengruppe mit 2 bis 3 Kohlenstoffatomen ist und n eine Ganzzahl von 1 bis 11 ist.

8. Verfahren gemäß Anspruch 7, wobei die Molybdänkomponente abgeleitet ist aus Hexacarbonylmolybdän, Molybdänsäure, Ammoniummolybdat, Alkalimetallmolybdaten, einschließlich Natriummolybdat und Kaliummolybdat, Alkalierdmetallmolybdaten, MoOCl₄, MoO₂Br₂, Mo₂O₃Cl₆, Molybdäntrioxyd, Ammoniumtetrathiomolybdat oder Molybdändisulfid.

9. Verfahren gemäß Anspruch 7 oder 8, wobei die Reaktion aus der Molybdänkomponente und dem Amid in der Anwesenheit eines polaren Promoters ist.

10. Verfahren gemäß Anspruch 7 oder 8, wobei die Schwefelung mit einer Schwefelquelle ausgeführt wird, ausgewählt aus Schwefel, Wasserstoffsulfid, Phosphorpentasulfid, R₂Sₓ, worin R Hydrocarbyl ist und x mindestens 2 ist, anorganische Sulfide oder anorganische Polysulfide, Thioacetamid, Thioharnstoff, Mercaptane der Formel RSH, worin R Hydrocarbyl ist, oder schwefelhaltiges Antioxydationsmittel.

11. Produkt, hergestellt nach dem Verfahren aus Anspruch 7 oder 8.

12. Öllösliche Zusatzmittelzusammensetzung, umfassend das Reaktionsprodukt aus
(1) einer Molybdänkomponente, die ein Molybdänoxyd, -sulfid, oder -oxysulfid der Allgemeinformel MoOₓS_{y} ist, wobei x ≥ 0, y ≥ 0 und 12 ≥ (x+y) ≥ 2t ist;
(2) einem Amid, wobei das Amid das Reaktionsprodukt aus einer Carbonsäurekomponente und einer Polyaminkomponente umfasst, wobei das Ladungsmolverhältnis der Carbonsäurekomponente zur Polyaminkomponente etwa 2:1 bis 1:1 ist; und
(3) einer Schwefelquelle in einer Menge, so dass das molybdänhaltige Reaktionsprodukt ein Molarverhältnis von Molybdän zu Schwefel von 1:1 bis 1:8 hat;
wobei die Carbonsäurekomponente eine aliphatische Carbonsäure ist und wobei die Polyaminkomponente ein Polyalkylenpolyamin der Allgemeinformel
H₂N(-R-NH)ₙ-H
ist, und worin R eine Alkylengruppe mit 2 bis 3 Kohlenstoffatomen ist und n eine Ganzzahl von 1 bis 11 ist.

13. Öllösliche Zusatzmittelzusammensetzung gemäß Anspruch 12, wobei die Molybdänkomponente abgeleitet ist aus Hexacarbonylmolybdän, Molybdänsäure, Ammoniummolybdat, Alkalimetallmolybdaten, einschließlich Natriummolybdat und Kaliummolybdat, Alkalierdmetallmolybdaten, MoOCl₄, MoO₂Br₂, Mo₂O₃Cl₆, Molybdäntrioxyd, Ammoniumtetrathiomolybdat oder Molybdändisulfid.

14. Verwendung einer öllöslichen Zusatzmittelzusammensetzung aus irgendeinem der Ansprüche 1 bis 3 und 12 bis 13 zum Verringern des Abriebs in einer Schmierölzusammensetzung, umfassend ein Öl mit Schmierviskosität.

15. Verwendung gemäß Anspruch 14, wobei das Zusatzmittel in einer Menge von 0,05 bis 15 Gew.-% vorliegt, auf Grundlage des Gesamtgewichts der Schmierölzusammensetzung.

## Revendications

1. Composition d'additif soluble dans l'huile comprenant un sel de :
(1) une composante de molybdène qui est un oxyde, un sulfure ou un oxysulfure de molybdène ayant la formule générale MoOₓS_{y} où x ≥ 0, y ≥ 0 et 12 ≥ (x+y) ≥2 ; et
(2) un amide dans lequel ledit amide comprend le produit de réaction d'une composante d'acide carboxylique et d'une composante de polyamine, où le rapport charge/mole entre la composante d'acide carboxylique et la composante de polyamine est de 2:1 à 1:1 ;
où la composition d'additif soluble dans l'huile est sulfurisée et a un rapport molaire entre le molybdène et le soufre de 1:1 à 1:8 ;
et en plus où la composante d'acide carboxylique est un acide carboxylique aliphatique et où la composante de polyamine est une polyalcylènepolyamine selon la formule générale
H₂N(-R-NH)ₙ-H
où R est un groupe alcylène de 2 à 3 atomes de carbone et n est un nombre entier de 1 à 11.

2. Composition d'additif soluble dans l'huile selon la revendication 1, où l'amide contient au moins un azote basique.

3. Composition d'additif soluble dans l'huile selon la revendication 1, où le rapport charge/mole entre la composante d'acide carboxylique et la composante de polyamine est de 1,7:1 à 1:1.

4. Composition d'huile lubrifiante comprenant :
une huile à viscosité lubrifiante et
une composition d'additif soluble dans l'huile selon la revendication 1.

5. Composition d'huile lubrifiante selon la revendication 4, dans laquelle le contenu en molybdène de la composition d'huile lubrifiante contient de 50 ppm à 5000 ppm de la composante de molybdène.

6. Composition d'huile lubrifiante selon la revendication 4, dans laquelle le contenu en la composition d'additif soluble dans l'huile est de 0,05 à 15 pour cent en poids.

7. Procédé pour préparer une composition d'additif soluble dans l'huile qui comprend réagir :
(1) une composante de molybdène qui est un oxyde, un sulfure, ou un oxysulfure ;
(2) un amide dans lequel ledit amide comprend le produit de réaction d'une composante d'acide carboxylique et d'une composante de polyamine, où le rapport charge/mole entre la composante d'acide carboxylique et la composante de polyamine est de 2:1 à 1:1 pour former un produit de réaction contenant du molybdène ;
(3) une source de soufre en une quantité telle que le produit de réaction contenant du molybdène a un rapport molaire entre le molybdène et le soufre de 1:1 à 1:8 ;
et en plus où la composante d'acide carboxylique est un acide carboxylique aliphatique et où la composante de polyamine est une polyalcylènepolyamine selon la formule générale
H₂N(-R-NH)ₙ-H
où R est un groupe alcylène de 2 à 3 atomes de carbone et n est un nombre entier de 1 à 11.

8. Procédé selon la revendication 7, dans lequel la composante de molybdène est dérivée du molybdène-carbonyle, de l'acide molybdique, du molybdate d'ammonium, de molybdates de métaux alcalins y compris le molybdate de sodium et le molybdate de potassium, de molybdates de métaux alcalino-terreux, du MoOCl₄, du MoO₂Br₂, du Mo₂O₃Cl₆, du trioxyde de molybdène, du tétrathiomolybdate d'ammonium, ou du disulfure de molybdène.

9. Procédé selon la revendication 7 ou 8, dans lequel ladite réaction entre ladite composante de molybdène et ledit amide est en présence d'un promoteur polaire.

10. Procédé selon la revendication 7 ou 8, dans lequel la sulfuration est exécutée avec une source de soufre sélectionnée parmi le soufre, le sulfure d'hydrogène, le pentasulfure de phosphore, R₂Sₓ où R est hydrocarbyle et x est au moins 2, les sulfures inorganiques ou les polysulfures inorganiques, le thioacétamide, la thiourée, les mercaptans selon la formule RSH où R est hydrocarbyle, ou un antioxydant contenant du soufre.

11. Produit préparé selon le procédé de la revendication 7 ou 8.

12. Composition d'additif soluble dans l'huile comprenant le produit de réaction de :
(1) une composante de molybdène qui est un oxyde, un sulfure ou un oxysulfure de molybdène ayant la formule générale MoOₓS_{y} où x ≥ 0, y ≥ 0 et 12 ≥ (x+y) >2 ;
(2) un amide dans lequel ledit amide comprend le produit de réaction d'une composante d'acide carboxylique et d'une composante de polyamine, où le rapport charge/mole entre la composante d'acide carboxylique et la composante de polyamine est de 2:1 à 1:1 ; et
(3) une source de soufre en une quantité telle que le produit de réaction contenant du molybdène a un rapport molaire entre le molybdène et le soufre de 1:1 à 1:8 ;
où la composante d'acide carboxylique est un acide carboxylique aliphatique et où la composante de polyamine est une polyalcylènepolyamine selon la formule générale
H₂N(-R-NH)ₙ-H
où R est un groupe alcylène de 2 à 3 atomes de carbone et n est un nombre entier de 1 à 11.

13. Composition d'additif soluble dans l'huile selon la revendication 12, où la composante de molybdène est dérivée du molybdène-carbonyle, de l'acide molybdique, du molybdate d'ammonium, de molybdates de métaux alcalins y compris le molybdate de sodium et le molybdate de potassium, de molybdates de métaux alcalino-terreux, du MoOCl₄, du MoO₂Br₂, du Mo₂O₃Cl₆, du trioxyde de molybdène, du tétrathiomolybdate d'ammonium, ou du disulfure de molybdène.

14. Utilisation d'une composition d'additif soluble dans l'huile selon une quelconque des revendications 1 à 3 et 12 à 13 pour réduire la friction dans une composition d'huile lubrifiante comprenant une huile à viscosité lubrifiante.

15. Utilisation selon la revendication 14, où ledit additif est présent en une quantité de 0,05 à 15 pour cent en poids, sur la base du poids total de la composition d'huile lubrifiante.
